# EUROPÄISCHE PATENTSCHRIFT

(11) **EP 4 155 042 B1**
(45) Veröffentlichungstag und Bekanntmachung des Hinweises auf die Patenterteilung: **06.11.2024**
(21) Anmeldenummer: 22195514.9
(22) Anmeldetag: 14.09.2022
(51) Int. Cl.: B29B 9/06, B29B 9/12, B01J 2/20, B29C 48/04, B29C 48/05

(54) **MIKROGRANULATE ZUM ROTATIONSFORMEN, VERFAHREN ZU DEREN HERSTELLUNG SOWIE DEREN VERWENDUNG**
MICROGRANULES FOR ROTATIONAL MOULDING, METHOD FOR THEIR MANUFACTURE AND THEIR USE
MICROGRANULÉS POUR LE ROTOMOULAGE, PROCÉDÉ DE FABRICATION ET D'UTILISATION

(30) Priorität: 24.09.2021 DE 102021124764
(43) Veröffentlichungstag der Anmeldung: 29.03.2023
(73) Patentinhaber: GRAFE Polymer Solutions GmbH, 99444 Blankenhain (DE)
(72) Erfinder: CARO, Dr. Juan Carlos, 99425 Weimar (DE); GRAFE, Clemens, 99425 Weimar (DE)
(74) Vertreter: Gleim Petri Patent- und Rechtsanwaltspartnerschaft mbB

(56) Entgegenhaltungen:
- DE-A1- 102008 023 046
- DE-A1- 102008 052 492
- DE-A1- 102018 220 207
- DE-T3- 69 910 612
- JP-A- 2001 246 622
- JP-A- H11 246 724
- US-A1- 2005 077 644

## Beschreibung

### Gebiet der Erfindung

Die Erfindung betrifft ein Verfahren zur Herstellung eines Mikrogranulats aus thermoplastischem Kunststoff für das Rotationsformen. Dabei lassen sich insbesondere amorphe, aber auch teilkristalline Kunststoffe verwenden. Die Herstellung des Mikrogranulats erfolgt mittels Unterwassergranulierung, wie sie im Stand der Technik grundsätzlich bereits bekannt ist. Ein solches Verfahren umfasst die im Folgenden kurz erläuterten Schritte: Zunächst wird der Kunststoff geschmolzen. Aus der Schmelze wird kontinuierlich Kunststoff extrudiert. Die Extrusion erfolgt dabei durch eine Mikrolochplatte. Beim Austritt des Kunststoffes aus der Mikrolochplatte wird dieser unter Wasser granuliert. Der granulierte Kunststoff wird anschließend getrocknet, beispielsweise mittels Zentrifugation.

### Stand der Technik

Die Herstellung von Formkörpern aus Kunststoffen mittels Rotationsformen - auch bezeichnet als Rotationsgießen, Rotationsschmelzverfahren und als *Rotomoulding -* erlaubt es, eine Vielzahl verschiedener Formkörper insbesondere mit großen Abmessungen herzustellen. Dabei wird üblicherweise zu Pulver gemahlener Kunststoff verwendet, welcher in eine Form gegeben wird. Die Form wird dann einen Ofen gegeben und dort erwärmt, wobei sie kontinuierlich um meist zwei Achsen gedreht wird. Das Pulver schmilzt und verteilt sich im Wesentlichen gleichmäßig an der Innenseite der Form. Nach Abschluss des Prozesses erfolgt eine Abkühlung, anschließend daran kann der fertiggeformte Formkörper entnommen werden.

Die Verwendung von Pulver für das Rotationsformen ist jedoch mit mehreren Nachteilen behaftet. Die Herstellung erfolgt in einem zweistufigen Prozess. In einer ersten Stufe wird ein Granulat hergestellt mit Körnern von einigen Millimetern Länge und Durchmesser. In einem zeitlich nachgelagerten zweiten Schritt wird dieses Granulat dann zu Pulver gemahlen. Je nach Kunststoff werden verschiedene Verfahren für diesen zweiten Schritt eingesetzt.

Das Mahlen von Polyethylen (PE) erfolgt üblicherweise in Pulvermühlen, welche bei normaler Umgebungstemperatur und normalem Umgebungsdruck arbeiten, wobei die Mahlscheiben entweder vertikal oder horizontal betrieben werden. Polypropylen (PP), Polycarbonat (PC) oder das Polyamid PA 6 hingegen werden mit sogenannten Kryo- oder Kaltpulvermühlen gemahlen. Dabei wird der Kunststoff auf 50 °C bis 60 °C unter Null heruntergekühlt, bevor er durch die Mahlscheiben zu einem Pulver verarbeitet werden kann. Die Kosten sind jedoch deutlich höher als für das Mahlen von PE. Die Trocknung des Pulvers spielt bei technischen Kunststoffen insofern eine wesentliche Rolle, da ein zu hoher Anteil von Restfeuchte im Pulver zu Farbverschiebungen aufgrund von thermooxidativem Abbau des Kunststoffes beitragen kann. Dies kann unter anderem zu Oberflächendefekten und reduzierter mechanischer Stabilität gegenüber Zug-, Druck- oder Biegebelastung führen. Bei zu hoher Restfeuchte muss deshalb als dritte Stufe das Pulver vorgetrocknet werden, bevor es für das Rotationsformen verwendet werden kann.

Da der Herstellungsprozess für das Pulver aus technischer Sicht aufwendig ist, müssen aus kaufmännischer Sicht die Mengen an Materialbereitstellung signifikant groß sein, um die Produktionskosten zu reduzieren. Kundenspezifische Anwendungen, welche üblicherweise kleine Mengen und/oder viele Farbkombinationen umfassen, sind daher wenig wirtschaftlich, was zu einer geringen Flexibilität im Beschaffungsprozess führt. Die Bereitstellung von Pulver aus eingefärbtem Granulat bedeutet für den Betreiber einer Pulvermühle einen erheblichen Reinigungsaufwand nach dem Mahlen, um eine Kontamination bei der Abarbeitung folgende Aufträge auszuschließen.

Viele Rohstofflieferanten mahlen daher ausschließlich nicht gefärbtes Material. Zur Färbung wird die Farbe später als Farbmischung in trockener Form - als sogenannter *Dryblend -* hinzugefügt. Dies wirkt sich zum einen nachteilig auf eine homogene Farbgebung des Fertigteils aus, zudem kann es zu den oben bereits beschriebenen mechanischen Instabilitäten kommen.

Abgesehen davon ist das Mahlverfahren mit hohen Lärmemissionen verbunden und erzeugt große Mengen von Staub, was sich nachteilig auf die Arbeitsumgebung auswirkt.

Wünschenswert ist daher die Verwendung direkt eines Mikrogranulats für das Rotationsformen. Auch dies ist im Stand der Technik beschriebenen. Die Herstellung eines für das Rotationsformen geeigneten Mikrogranulats aus einem Olefinpolymer mittels Unterwassergranulierung wird beispielsweise in der DE 699 10 612 T3 beschrieben.

In der WO 2009/032745 A2 wird allgemein auf die Verwendung von Mikrogranulaten aus diversen Kunststoffen für das Rotationsformen eingegangen.

In der DE 10 2012 103 976 A1 wird die Herstellung von mikrogranuliertem Polypropylen für das Rotationsformen beschrieben. Das Polypropylen wird mittels eines Extruders mit Granulierwerkzeug zu Granulat verarbeitet, verwendet wird das Verfahren der Unterwasser-Granulierung. Die Durchtrittsöffnungen in der Lochplatte werden dabei gleichmäßig beheizt. Während der Schmelzpunkt des in der DE 10 2012 103 976 A1 beschriebenen Polypropylens bei etwa 160 °C bis 170 °C liegt, wird die Temperatur der Schmelzmasse im Extruder auf 240 °C bis 270 °C eingestellt, wohingegen die Temperatur der Lochplatte auf eine Temperatur im Bereich von 290 °C bis 320 °C eingestellt wird. Für die Temperatur des Prozesswassers wird ein Bereich von 38 °C bis 45 °C als vorteilhaft angegeben.

Die US 5,72 6,239 A beschreibt die Erzeugung eines Mikrogranulats für das Rotationsformen aus Monovinyl-Polymermischungen mittels Unterwassergranulierung. Die Prozesstemperatur des Wassers liegt zwischen 55 °C und 65 °C. Die erzeugten Korngrößen liegen zwischen 200 µm und 1100 µm. Die US 2005/077644 A1 betrifft ein System und ein Verfahren zum Granulieren von extrudierten Materialien, wie thermoplastischen Polymeren, in verschiedenen Granulieranwendungen. Dabei wird ein Hochdruck-Flüssigkeitsstrahl zum Schneiden des extrudierten Polymerstrangs in Granulat verwendet. Die Anwendung kann auch bei der Unterwassergranulierung erfolgen, ist jedoch nicht darauf beschränkt. Die DE 10 2008 023 046 A1 betrifft eine Kunststoffgranulieranlage mit einer durch das Granulier-Wasser gekühlten Granuliereinrichtung zur Erzeugung eines Kunststoffgranulats. Der Granuliereinrichtung ist ein Schüttgut-Wärmetauscher mit einem Wärmetauschermedium zum Erwärmen eines Kunststoff-Schüttguts vorgeschaltet. Dem Schüttgut-Wärmetauscher ist wiederum ein Extruder zur Extrusion des vorgewärmten Schüttguts nachgeschaltet. Die Kunststoffgranulieranlage ist so ausgebildet, dass der Schüttgut-Wärmetauscher in thermischem Kontakt mit dem Granulier-Wasser steht, so dass im Schüttgut-Wärmetauscher Wärme vom Granulier-Wasser auf das Schüttgut übertragen wird.

In der US 7,393,201 B2 wird die Herstellung eines Mikrogranulats aus einem thermoplastischen Kunststoff mittels Stranggranulierung beschrieben. Die EP 3 683 272 A1 beschreibt Mischungen aus Polyamiden und Polyolefinen, welche für das Rotationsformen geeignet sind.

Es hat sich jedoch gezeigt, dass die gängigen Verfahren für die Unterwassergranulierung bei der Herstellung von Mikrogranulat aus amorphen, technischen thermoplastischen Kunststoffen - insbesondere aus solchen Kunststoffen mit hohen Schmelztemperaturen, wie beispielsweise Polycarbonat (PC) mit einem Schmelzpunkt von mehr als 260 °C - versagen, da es immer wieder zu Unterbrechungen des Extrusionsprozesses kommt: Der geschmolzene Kunststoff setzt sich in den Öffnungen der Mikrolochplatte fest, so dass die Löcher nach und nach schließen. Dies führt zu einem schnellen Anstieg des Drucks der Schmelze im Extruder vor der Mikrolochplatte, deren Löcher verstopfen. In der Folge muss der gesamte Extrusionsprozess zur Herstellung des Mikrogranulats angehalten und die Lochplatte gereinigt werden. Dies ist ineffizient und erhöht die Herstellungskosten für das Mikrogranulat. Unter technischen Kunststoffen werden dabei solche Kunststoffe verstanden, die für eine Dauergebrauchstemperatur von etwa 90 °C bis zu etwa 150 °C ausgelegt sind, wohingegen Standard-Kunststoffe den Temperaturbereich darunter und Hochleistungskunststoffe den Temperaturbereich darüber abdecken.

### Beschreibung der Erfindung

Aufgabe der Erfindung ist es daher, ein Verfahren der eingangs beschriebenen Art zur Herstellung eines Mikrogranulats aus thermoplastischen Kunststoffen dahingehend weiterzuentwickeln, dass der Extrusionsprozess insbesondere für amorphe und teilkristalline, insbesondere technische thermoplastische Kunststoffe unterbrechungsfrei ohne Störungen ablaufen kann. Das hergestellte Mikrogranulat soll darüber hinaus ohne weitere vorbereitenden Schritte sofort für das Rotationsformen einsetzbar sein, d. h. die Herstellung und Bereitstellung des für das Rotationsformen tatsächlich verwendeten Materials soll in einem einzigen Schritt erfolgen.

Diese Aufgabe wird erfindungsgemäss mittels eines Verfahrens nach Anspruch 1 dadurch gelöst, dass zum einen die Prozesstemperatur des Wassers, in welchem die Granulierung des Kunststoffes - eines Kunststoffes auf Basis von Polycarbonat (PC), Polyamiden (PA), Polymethylmethacrylat (PMMA), Polyethylenterephthalat (PET), Cycloolefin-Polymer (COP) oder Cycloolefin-Copolymer (COC) - erfolgt, zumindest im Bereich der Mikrolochplatte mindestens 90 °C beträgt, und dass zum anderen dem Wasser ein Tensid beigemischt ist. "Im Bereich der Mikrolochplatte" bedeutet dabei, dass das Wasser in unmittelbarem Kontakt zur Mikrolochplatte am Extruderkopf steht.

Die Erhöhung der Prozesstemperatur des Wassers auf 90 °C und mehr erfordert einerseits zwar höhere Sicherheitsmaßnahmen aufgrund des heißen Wassers und dem damit verbundenen Entstehen von heißem Wasserdampf, um Verbrühungen zu verhindern. Andererseits jedoch wird dadurch der Temperaturabfall zwischen der Schmelze im Extruder und der Außenseite der Lochplatte - selbst bei beheizter Lochplatte - so weit verringert, dass durch das heiße Wasser, welches in direktem Kontakt zur Mikrolochplatte steht, verhindert wird, dass der Kunststoff in den Kanälen der Mikrolochplatte erstarrt und die Kanäle verstopft.

Die Prozesstemperatur des Wassers im Bereich der Mikrolochplatte beträgt mindestens 90 °C, liegt aber bevorzugt darüber. Je nach Prozessführung kann die Prozesstemperatur bevorzugt im Bereich zwischen 92 °C und 98 °C oder zwischen 94 °C und 96 °C liegen. Als besonders geeignet für eine Vielzahl von Kunststoffen hat sich einer Prozesstemperatur von - mindestens - 95 °C herausgestellt.

Durch die Erhöhung der Prozesstemperatur des Wassers im Bereich der Mikrolochplatte wird erreicht, dass der Extrusionsprozess störungsfreier ablaufen kann. Allerdings ist diese Maßnahme noch nicht ausreichend, um den Prozess über mehrere Tage aufrechterhalten zu können. Grund dafür ist, dass durch die höhere Prozesstemperatur des Wassers auch die Oberflächentemperatur der Körner des Mikrogranulats steigt. Dies führt dazu, dass die Körner miteinander verkleben und Agglomerate bilden.

Bei der Produktion von Folien auf Basis von Polyolefinen, Polyamiden oder PET spielt das Verkleben eine negative Rolle. Dieses Problem wird gelöst, indem der Polymermischung vor oder während der Extrusion zusätzliche Antiblock-Mittel - beispielsweise Siliziumdioxid, Kreide oder Quarz - hinzugegeben werden, wodurch ein Verkleben der Folien reduziert oder ganz vermieden werden kann.

In Versuchen hat sich jedoch gezeigt, dass die Agglomeration wirksam verhindert werden kann, wenn dem Wasser ein Tensid beigemischt wird. Das Tensid sollte bevorzugt in wässriger Form vorliegen und oberflächenaktiv sein. Dabei kommt eine Vielzahl von Tensiden, insbesondere von nichtionischen Tensiden in Frage, in Versuchen hat sich beispielsweise ein nichtionisches Tensid auf Silikon-Basis als geeignet erwiesen, die Agglomeration wirksam zu verhindern. Ein Vorteil von Tensiden auf Silikon-Basis ist zudem deren Beständigkeit bei hohen Temperaturen. Durch das Tensid wird die Oberflächenspannung des Wassers verringert, so dass das Wasser die Oberfläche der Körner des Granulats besser benetzen kann. Dies verhindert die Agglomeration.

Die absolute Dosierung des Tensids als Zugabe richtet sich nach dem Fassungsvermögen der Anlage zur Unterwassergranulierung. Der Volumenanteil des Tensids in der Mischung von Wasser und Tensid liegt bevorzugt zwischen 0,05 % und 2 %. In der Regel kommt man jedoch mit geringeren Volumenanteilen aus, bevorzugt liegt der Volumenanteil daher zwischen 0,1 % und 0,5 %. Als besonders bevorzugt hat sich dabei hinsichtlich der Wirksamkeit und der Menge des Tensids ein Volumenanteil von 0,2 % herausgestellt. Die Angabe des Volumenanteils bezieht sich dabei auf eine Betriebslaufzeit der Anlage zur Unterwassergranulierung von 24 Stunden, d. h. es muss in regelmäßigen Abständen Tensid hinzugefügt werden, um den Volumenanteil im Wesentlichen konstant zu halten.

Das vorangehend beschriebene Verfahren lässt sich nicht nur bei Polycarbonat (PC) und Polyamiden (PA) anwenden, sondern auch bei anderen Kunststoffen mit einem engen Schmelzpunktbereich, beispielsweise bei Polymethylmethacrylat (PMMA), Polyethylenterephthalat (PET), Cycloolefin-Polymer (COP) oder Cycloolefin-Copolymer (COC), sofern die Prozesstemperatur des Kühlwassers nicht unter 90 °C, bevorzugt nicht unter 95 °C sinkt und die Zugabe eines oberflächenaktiven, wässrigen Tensids mit einem Volumenanteil von beispielsweise 0,2 % auf 24 Stunden Betriebslaufzeit gewährleistet ist. Als Polyamide kommen unter anderem beispielsweise PA6, PA 6.6, PA 11 oder PA 12 infrage, um nur einige zu nennen. Insbesondere ist die Mikrogranulierung von COP und COC nicht trivial, da diese zwar chemisch gesehen Polyolefine sind, durch die zyklische Struktur jedoch eine amorphe Struktur - entsprechend einer hohen Transparenz - entsteht, die für besondere Zwecke, beispielsweise als Glas-Ersatz bei optischen Anwendungen, eingesetzt werden kann.

Ein auf diese Weise aus einem der genannten Kunststoffe hergestelltes Mikrogranulat weist bevorzugt eine Partikelgröße von mindestens 300 µm in mindestens einer Raumdimension auf. Bevorzugt liegt die Partikelgröße zwischen 500 µm und 700 µm. Das Mikrogranulat weist eine Restfeuchte von nicht mehr als 0,5 % Wasser, gemessen nach DIN 53723, und eine Schüttdichte von mindestens 0,45 g/cm³ auf, gemessen nach ISO/R 60. Außerdem beträgt die Rieselfähigkeit (auch bezeichnet als Trockenflussrate, "Flowability", "Dry Flow Rate" oder einfach als "Dryflow") höchstens 13 Sekunden. Die Rieselfähigkeit wird nach den angepassten Vorschriften des ARMO-Verbandes ("Association of Rotational Moulders") auf Basis der Standards ASTM D1895-96 und ISO/R 60 gemessen.

Das mit dem vorangehend beschriebenen Verfahren so erzeugte Mikrogranulat nach Anspruch 4 lässt sich besonders gut für die Herstellung von Erzeugnissen mittels Rotationsformen verwenden, die damit hergestellten Erzeugnisse weisen insbesondere eine gleichmäßige Oberflächenstruktur und, sofern farbiges Granulat verwendet wird, eine gleichmäßige Farbgebung auf. Das Mikrogranulat wird dabei nach seiner Herstellung unmittelbar und direkt, d. h. ohne weitere Verarbeitung oder Zwischenschritte, verwendet, indem eine Rotationsform damit befüllt wird. Anschließend wird das Erzeugnis - der Formkörper - in üblicher Weise rotationsgeformt, wie es im Stand der Technik bekannt ist.

Nachfolgend wird die Erfindung anhand von Ausführungsbeispielen noch näher erläutert. Diese Ausführungsbeispiele dienen lediglich der Veranschaulichung; beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein.

In einem ersten Ausführungsbeispiel wurde das handelsübliche Polyamid PA 6 mit einer relativen Viskosität von 2,7 durch einen Doppelschnecken-Extruder extrudiert. Die Schmelze wurde mittels Schmelzpumpe durch eine Mikrolochplatte gedrückt. Die Löcher hatten einzelne Durchmesser zwischen 0,3 mm und max. 0,7 mm. Die Granulierung erfolgte durch Schneiden unter Wasser mit einer handelsüblichen Anlage zur Unterwassergranulierung. Die Prozesstemperatur des Wassers betrug mindestens 90 °C, bevorzugt 95 °C. Im Wasser war ein Volumenanteil von 0,2 % eines wässrigen, oberflächenaktiven Tensids auf Silikonbasis enthalten. Das Mikrogranulat wurde anschließend aus dem Granulier-Kreislauf des Wassers heraus befördert, vom restlichen Wasser getrennt, in situ getrocknet und wahlweise in Aluminium-Säcken luftdicht verpackt.

In einem zweiten Ausführungsbeispiel wurde ein handelsübliches Polycarbonat (PC) mit einem MVR-Wert ("Melt Volume-flow Rate", Schmelze-Volumenfließrate) von maximal 40 g/10 min bei Prüfbedingungen mit einer Prüftemperatur von 300 °C und einer Prüflast von 1,2 kg durch einen Doppelschnecken-Extruder extrudiert. Die Schmelze wurde mittels Schmelzpumpe durch eine Mikrolochplatte gedrückt. Die Löcher hatten einzelne Durchmesser zwischen 0,3 mm und max. 0,7 mm. Die Granulierung erfolgte durch Schneiden unter Wasser mit einer handelsüblichen Anlage zur Unterwassergranulierung. Die Prozesstemperatur des Wassers betrug mindestens 90 °C, bevorzugt 95 °C. Im Wasser war ein Volumenanteil von 0,2 % eines wässrigen, oberflächenaktiven Tensids auf Silikonbasis enthalten. Das Mikrogranulat wurde anschließend aus dem Granulier-Kreislauf des Wassers heraus befördert, vom restlichen Wasser getrennt, in situ getrocknet und wahlweise in Aluminium-Säcken luftdicht verpackt.

Das so hergestellte Mikrogranulat kann dann unterbrechungsfrei sofort und ohne weitere störende Arbeitsschritte, d.h. unmittelbar und direkt, zum Rotationsformen verwendet werden, d.h. es muss nicht zu Pulver verarbeitet werden wie andere Granulate. Insbesondere PC oder PA 6 musste bisher noch (kalt) zu Pulver vermahlen werden, um es für das Rotationsgießen verwenden zu können. Auf diesen Schritt und einen ggf. weiteren Schritt für eine nötige Vortrocknung, kann vollständig verzichtet werden. Zur Bereitstellung des tatsächlich verwendeten Materials für das Rotationsformen, nämlich des Mikrogranulats selbst, ist also nur ein einziger Schritt notwendig, der in der Herstellung des Mikrogranulats besteht.

Das Mikrogranulat aus PA 6 oder PC wird anschließend dazu verwendet, durch Rotationsformen Formkörper herzustellen. Dabei wird mit dem Mikrogranulat eine Rotationsform befüllt. In dieser Form wird anschließend der Formkörper hergestellt, indem die Form in im Stand der Technik bekannter Weise erwärmt und rotiert wird. Das Rotationsformen kann zwar an Anlagen durchgeführt werden, die mit Gas betrieben werden. Aufgrund der hohen Anforderungen auch an die Genauigkeit bei der Einhaltung der Prozessparameter, insbesondere der Prozesstemperaturen, sind jedoch elektrisch beheizbare Werkzeuge vorteilhaft. Unter Inertgas-Atmosphäre und Vakuum im Inneren des Werkzeugs sind höhere Temperaturen notwendig, um den thermooxidativen Abbau der Materialien durch Restfeuchte und Sauerstoff zu vermeiden oder zumindest zu reduzieren. Ein zusätzliches Vortrocknen des Mikrogranulats ist daher im Vergleich zur Verwendung von Pulver für das Rotationsformen nicht mehr notwendig.

Mit dem vorangehend beschriebenen Verfahren lassen sich insbesondere amorphe, technische Kunststoffe wie Polycarbonat, aber auch teilkristalline Kunststoffe wie PET, PBT, PA6 sowie Standard-Kunststoffe wie PMMA zu einem für das Rotationsformen geeignetem Mikrogranulat verarbeiten. Im Gegensatz zu Pulver lässt sich das Mikrogranulat als Rohstoff für das Rotationsformen effizient in einem Schritt ohne Unterbrechung bereitstellen.

## Patentansprüche

1. Verfahren zur Herstellung eines Mikrogranulats aus thermoplastischem Kunststoff auf Basis von Polycarbonat (PC), Polyamiden (PA), Polymethylmethacrylat (PMMA), Polyethylenterephthalat (PET), Cycloolefin-Polymer (COP) oder Cycloolefin-Copolymer (COC) für das Rotationsformen mit den folgenden Schritten:
- Schmelzen des Kunststoffes,
- kontinuierliche Extrusion des Kunststoffes durch eine Mikrolochplatte,
- Granulierung des extrudierten Kunststoffes unter Wasser beim Austritt des Kunststoffes aus der Mikrolochplatte,
- Trocknung des granulierten Kunststoffes durch Zentrifugieren, **dadurch gekennzeichnet, dass**
- die Prozesstemperatur des Wassers, in welchem die Granulierung des Kunststoffes erfolgt, zumindest im Bereich der Mikrolochplatte mindestens 90 °C beträgt und
- dem Wasser ein Tensid beigemischt ist, welches eine Agglomeration von Körnern des Mikrogranulats verhindert.

2. Verfahren nach Anspruch 1, **dadurch gekennzeichnet, dass** als Tensid ein Tensid auf Silikon-Basis verwendet wird.

3. Verfahren nach Anspruch einem der Ansprüche 1 oder 2, **dadurch gekennzeichnet, dass** der Volumenanteil des Tensids in der Mischung von Wasser und Tensid zwischen 0,05 % und 2 %, bevorzugt zwischen 0,1 % und 0,5 %, besonders bevorzugt bei 0,2 % liegt.

4. Mikrogranulat für das Rotationsformen, hergestellt mit einem Verfahren nach einem der Ansprüche 1 bis 3, **gekennzeichnet durch** eine Partikelgröße von mindestens 300 µm, eine Restfeuchte mit einem Masseanteil von nicht mehr als 0,5 % Wasser, gemessen nach DIN 53723, eine Rieselfähigkeit von höchstens 13 Sekunden, gemessen nach den angepassten Vorschriften des ARMO-Verbandes auf Basis der Standards ASTM D1895-96 und ISO/R 60, und eine Schüttdichte von mindestens 0,45 g/cm³, gemessen nach ISO/R 60.

5. Verwendung von Mikrogranulat nach Anspruch 4 für die Herstellung von Erzeugnissen mittels Rotationsformen, umfassend das Befüllen einer Rotationsform mit dem Mikrogranulat und anschließendes Rotationsformen des Erzeugnisses.

## Claims

1. A method for manufacturing microgranules of thermoplastic based on polycarbonate (PC), polyamides (PA), polymethyl methacrylate (PMMA), polyethylene terephthalate (PET), cycloolefin polymer (COP) or cycloolefin copolymer (COC) for rotational molding,
comprising the following steps:
- melting of the plastic,
- continuous extrusion of the plastic through a micro-perforated plate,
- pelletizing of the extruded plastic under water as the plastic emerges from the micro-perforated plate,
- drying of the pelletized plastic by centrifugation, **characterized in that**
- the process temperature of the water in which the plastic is pelletized is at least 90 °C, at least in the area of the micro-perforated plate, and
- a surfactant is added to the water to prevent agglomeration of grains of the microgranules.

2. The method according to claim 1, **characterized in that** a silicone-based surfactant is used as the surfactant.

3. The method according to claim 1 or 2, **characterized in that** the volume percentage of surfactant in the mixture of water and surfactant is between 0.05 % and 2 %, preferably between 0.1 % and 0.5 %, particularly preferably 0.2 %.

4. Microgranules for rotational moulding, manufactured by a method according to any one of claims 1 to 3, **characterized by** a particle size of at least 300 µm, a residual moisture content by mass of not more than 0.5% water, measured according to DIN 53723, a flowability of at most 13 seconds, measured according to the adapted regulations of the ARMO association based on the ASTM D1895-96 and ISO/R 60 standards, and a bulk density of at least 0.45 g/cm3, measured according to ISO/R 60.

5. Use of microgranules according to claim 4 for the manufacture of products by means of rotational molding, comprising filling a rotational mold with the microgranules and then rotationally molding the product.

## Revendications

1. Procédé de fabrication de microgranulés en matière
thermoplastique à base de polycarbonate (PC), de polyamides (PA), de polyméthacrylate de méthyle (PMMA), de polyéthylène téréphtalate (PET), de polymère de cyclooléfine (COP) ou de copolymère de cyclooléfine (COC) pour le rotomoulage,
comprenant les étapes suivantes :
- fusion de la matière plastique,
- extrusion continue de la matière plastique à travers une plaque microperforée,
- granulation de la matière plastique extrudée sous l'eau à la sortie de la matière plastique de la plaque microperforée,
- séchage de la matière plastique granulée par centrifugation,
**caractérisé en ce que**
- la température de processus de l'eau dans laquelle la granulation de la matière plastique a lieu est d'au moins 90 °C au moins dans la zone de la plaque microperforée et
- on ajoute à l'eau un agent tensioactif qui empêche l'agglomération des grains des microgranulés.

2. Procédé selon la revendication 1, **caractérisé en ce que** l'on utilise comme agent tensioactif un agent tensioactif à base de silicone.

3. Procédé selon l'une quelconque des revendications 1 ou 2, **caractérisé en ce que** la fraction volumique de l'agent tensioactif dans le mélange d'eau et d'agent tensioactif est comprise entre 0,05 % et 2 %, de préférence entre 0,1 % et 0,5 %, plus préférentiellement à 0,2 %.

4. Microgranulés pour le rotomoulage, produit par un procédé selon l'une quelconque des revendications 1 à 3, **caractérisé par** une taille de particule d'au moins 300 µm, une humidité résiduelle avec un pourcentage massique d'eau ne dépassant pas 0,5 %, mesurée selon la norme DIN 53723, une aptitude à l'écoulement d'au plus 13 secondes, mesurée selon les prescriptions adaptées de l'association ARMO sur la base des normes ASTM D1895-96 et ISO/R 60, et une densité apparente d'au moins 0,45 g/cm3, mesurée selon la norme ISO/R 60.

5. Utilisation des microgranulés selon la revendication 4 pour la fabrication de produits par rotomoulage, comprenant le remplissage d'un rotomoule avec les microgranulés et ensuite le rotomoulage du produit.
